# EUROPEAN PATENT SPECIFICATION

(11) **EP 4 219 121 B1**
(45) Date of publication and mention of the grant of the patent: **09.07.2025**
(21) Application number: 21872497.9
(22) Date of filing: 22.09.2021
(51) Int. Cl.: B29C 51/08, B29C 48/08, B29C 48/21, B29C 48/30, B29C 49/02, B29C 49/00

(54) **RESIN SHEET MANUFACTURING METHOD, EXTRUSION HEAD, AND MOLDED BODY MANUFACTURING METHOD**
HARZFOLIENHERSTELLUNGSVERFAHREN, EXTRUSIONSKOPF UND FORMKÖRPERHERSTELLUNGSVERFAHREN
MÉTHODE DE FABRICATION DE FEUILLE DE RÉSINE, TÊTE D'EXTRUSION, ET MÉTHODE DE FABRICATION DE CORPS MOULÉ

(30) Priority: 24.09.2020 JP 2020160179; 25.09.2020 JP 2020160483
(43) Date of publication of application: 02.08.2023
(73) Proprietor: KYORAKU CO., LTD., Kyoto-shi, Kyoto 602-0912 (JP)
(72) Inventor: TARUNO, Shinsuke, Yamato-shi, Kanagawa 242-0018 (JP)
(74) Representative: Gulde & Partner
(86) International application number: PCT/JP2021/034815
(87) International publication number: WO 2022/065368

(56) References cited:
- EP-B1- 0 345 987
- GB-A- 1 591 554
- JP-A- 2002 172 699
- JP-A- 2011 031 500
- JP-A- 2013 193 437
- JP-A- 2017 538 605
- JP-A- H06 226 812
- JP-A- S5 581 156
- JP-U- S60 138
- US-A- 4 410 602

## Description

### Technical Field

The present invention relates to a manufacturing method of a resin sheet and an extrusion head therefore.

### Background Art

In Patent Literature 1, a tubular parison extruded from an extrusion head is stretched in one direction using a guide member and then pressed by a pair of rollers to manufacture a resin sheet.

Patent Literature 2 discloses a technique for manufacturing a preform by compression molding.

Patent Literature 3 discloses a method for producing a pouch-like object using heat sensitive polymers. In a first step, two polymeric melt streams are coextruded in an encapsulator resulting in a thread-like composite melt stream comprising a core of a first polymer being concentrically or non-concentrically encapsulated by a layer of the second polymer. The composite melt stream is transferred to a slot die which converts the composite melt stream to a flat sheet comprising a central layer of the first polymer encapsulated by top and bottom layers of the second polymer. After cutting the edge portions, a three-layered film is obtained from which the pouch-like object is manufactured.

Patent Literature 4 also discloses to produce a multi-layered sheet comprising a pair of outer layers and an inner layer, by coextruding two resins and then flattening the resulting structure.

Patent Literature 5 discloses a method of making layer reinforced tubular film comprising extruding a tubular film of plastics and simultaneously extruding a layer of adhesive on to the outer surface of the tubular film, subsequently helically winding reinforcement tapes onto the adhesively coated outer surface of the tubular film after solidification thereof, and finally flattening the film with the tapes adhered to the surface thereof.

Patent Literature 6 discloses a method for producing a liquid crystal polyester film, comprising a step of producing a cylindrical film by an inflation method and a step of rolling the cylindrical film to obtain the film.

Patent Literature 7 discloses a method for producing a five-layered film by first co-extrude a three-layered tubular structure using a ring co-extrusion device, and immediately after extrusion, subjecting the tubular structure to thermocompressionbinding rolling.

### Citation List

### Patent Literature

Patent Literature 1: JP 2011-31500 A
Patent Literature 2: JP 2008-173931 A
Patent Literature 3: EP 0 345 987 B1
Patent Literature 4: US 4 410 602 A
Patent Literature 5: GB 1 591 554 A
Patent Literature 6: JP 2013-193437 A
Patent Literature 7: JP S55-81156 A

### Summary of Invention

### Technical Problem

However, the configuration of Patent Literature 1 requires the guide member and the rollers, which complicates the device configuration. Further, in the configuration of Patent Literature 1, the tubular parison extruded from the extrusion head is pressed to manufacture the resin sheet. Consequently, the quality of the resin sheet may not be stable due to insufficient welding between inner surfaces of the tubular parison or due to air that is not sufficiently discharged during pressing and is mixed into the resin sheet.

The present invention has been made in view of such circumstances and aims to provide a manufacturing method of a resin sheet that can manufacture resin sheets of stable quality with a simple device configuration.

### Solution to Problem

According to the present invention, provided is a manufacturing method of a resin sheet, comprising: a step of flattening a resin tubular body into the resin sheet before extruding the resin tubular body from an extrusion head so that inner surfaces of the resin tubular body are fused with each other, the resin tubular body being formed by forming a molten resin into a tubular shape in the extrusion head.

In the manufacturing method of the resin sheet of the present invention, since the resin tubular body is flattened into the resin sheet in the extrusion head, members such as a guide member or rollers are not required, and the device configuration is simple. Further, since the resin tubular body before being extruded from the extrusion head is flattened into the resin sheet, insufficient welding between the inner surfaces of the resin tubular body and air mixing into the resin sheet during the formation of the resin sheet can be prevented. Consequently, resin sheets of stable quality can be obtained.

Hereinafter, various embodiments of the present invention will be exemplified. The embodiments described below can be combined with each other.

Preferably, the resin tubular body has a multilayer structure.

Preferably, the extrusion head comprises a core and a die accommodating the core, a distribution space in which the molten resin is distributed is provided between an outer surface of the core and an inner surface of the die, the distribution space comprises a tubular space, a flattening space, and a fusion space in order from an upstream side, and the resin tubular body becomes the resin sheet by fusing the inner surfaces in the fusion space after flattening the resin tubular body in the flattening space from a state in the tubular space.

Preferably, a minimum value of a degree of thickness unevenness of the resin tubular body in the flattening space is 0 to 0.5.

Preferably, provided is an extrusion head, wherein the extrusion head is configured to flatten a resin tubular body into a resin sheet before extruding the resin tubular body from the extrusion head so that inner surfaces of the resin tubular body are fused with each other, the resin tubular body being formed by forming a molten resin into a tubular shape in the extrusion head, the extrusion head comprises a core and a die accommodating the core, a distribution space in which the molten resin is distributed is provided between an outer surface of the core and an inner surface of the die, the distribution space comprises a tubular space, a flattening space, and a fusion space in order from an upstream side, the resin tubular body becomes the resin sheet by fusing the inner surfaces in the fusion space after flattening the resin tubular body in the flattening space from a state in the tubular space, the core comprises a body portion and a flattened portion, the flattened portion is arranged downstream from the body portion and has a higher degree of flatness than the body portion, a space facing the body portion serves as the tubular space, and a space facing the flattened portion serves as the flattening space, and a lower end of the core is arranged upstream from a lower end of the die, and a space between the lower end of the core and the lower end of the die serves as the fusion space.

### Brief Description of Drawings

### (Embodiment according to the invention)

Fig. 1 is a perspective view of an extrusion head 1 of one embodiment of the present invention.
Fig. 2 is a perspective view in a state where a base 2 is removed from Fig. 1 and a die 3 is cut in half along a B-B line in Fig. 3B.
Fig. 3B is a bottom view of the extrusion head 1. Fig. 3A is a cross-sectional view taken along an A-A line in Fig. 3B.
Fig. 4 is a cross-sectional view taken along the B-B line in Fig. 3B.
Fig. 5A is a cross-sectional view of a resin tubular body 8 at a position P1 in Fig. 4. Fig. 5B is a cross-sectional view of the resin tubular body 8 at a position P2 in Fig. 4. Fig. 5C is a cross-sectional view of a resin sheet 9 at a position P3 in Fig. 4. In Fig. 5A to Fig. 5C, the die 3 and a core 4 are not illustrated.
Fig. 6A is a cross-sectional view corresponding to Fig. 4, showing a state after thickness deviation of the resin tubular body 8 by moving the die 3 relative to the core 4. Fig. 6B is a cross-sectional view of a resin sheet piece 19 cut out from the resin sheet 9. (Embodiment not belonging to the invention)
Fig. 7 is a cross-sectional view of a state after feeding a molten resin 22 into a cavity 21a of a female mold 21.
Fig. 8 is a cross-sectional view of a state after pressing a core 25a of a male mold 25 against the molten resin 22 from the state of Fig. 7.
Fig. 9 is a cross-sectional view of a state after forming a folded portion 23b2 in an intermediate layer 23b by further pressing the core 25a against the molten resin 22 from the state of Fig. 8.
Fig. 10 is a cross-sectional view in a state where the molten resin 22 has reached an opening edge 21d of the cavity 21a of the female mold 21 by further pressing the core 25a against the molten resin 22 from the state of Fig. 9.
Fig. 11 is a cross-sectional view of a state after a flange portion 25c is pressed against an inclined surface 21e to form a thin-walled portion 30 between a burr 27 and a molded body 28 by further pressing the core 25a against the molten resin 22 from the state of Fig. 10.
Fig. 12 is a cross-sectional view of a state after removing the female mold 21 and the male mold 25 from the molded body 28 with the burr 27.
Fig. 13 is a cross-sectional view of a state after removing the burr 27 from the molded body 28 with the burr 27.
Fig. 14 is a cross-sectional view of a state after removing the burr 27 from the molded body 28 with the burr 27 while the female mold 21 and the male mold 25 are not removed from the molded body 28 with the burr 27.

### Description of Embodiments

Hereinafter, embodiments of the present invention will be described. Various characteristics described in the embodiments below can be combined with each other. Further, the invention is independently established for each characteristic.

### (Embodiment according to the invention)

### 1. Extrusion Head 1

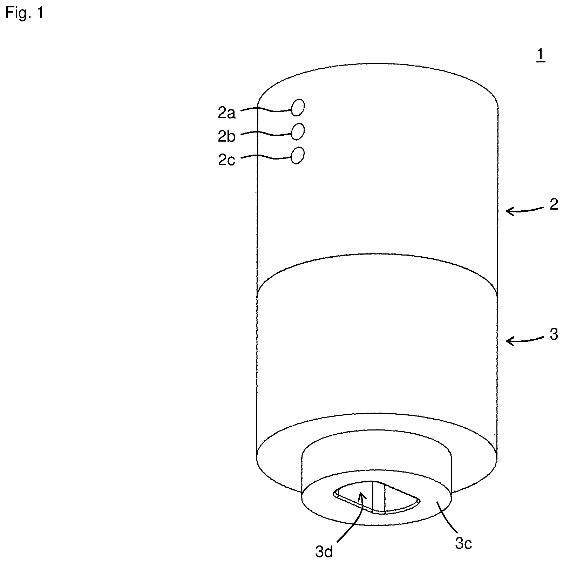

An extrusion head 1 suitable for the manufacturing method of a resin sheet of one embodiment of the present invention is described with reference to Fig. 1 to Fig. 6B.

As shown in Fig. 1 to Fig. 4, the extrusion head 1 comprises a base 2, a die 3, and a core 4. The die 3 and the core 4 are mounted on a lower side of the base 2. The core 4 is accommodated in the die 3.

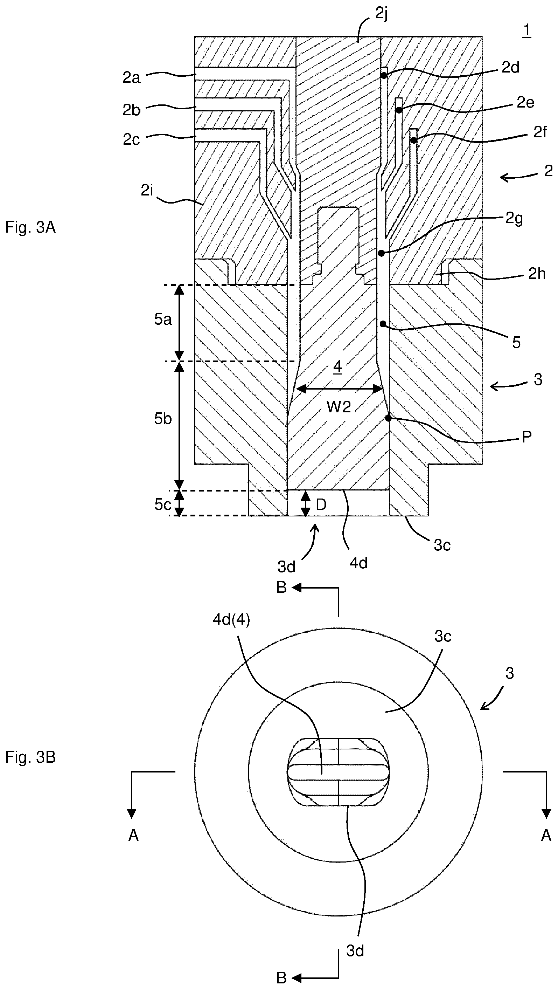

As shown in Fig. 1, the base 2 is provided with injection ports 2a to 2c. The injection ports 2a to 2c are respectively connected to separate extruders (not shown), and first to third molten resins extruded from each of the extruders are injected into the base 2 through the injection ports 2a to 2c. As shown in Fig. 3A and Fig. 3B, tubular spaces 2d to 2f respectively communicating with the injection ports 2a to 2c and a tubular space 2g where the tubular spaces 2d to 2f join together are provided in the base 2.

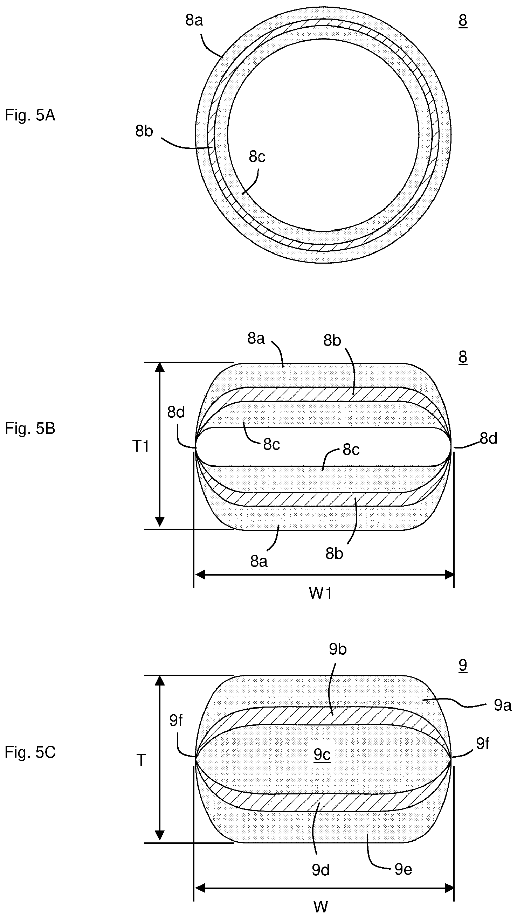

The first to third molten resins injected into the injection ports 2a to 2c expand into a tubular shape in the tubular spaces 2d to 2f and then join in layers in the tubular space 2g. Consequently, a resin tubular body 8 having a multilayer structure is formed (shown in Fig. 5A). As shown in Fig. 5A, the resin tubular body 8 comprises, in order from the outside, an outermost layer 8a formed of the first molten resin, an intermediate layer 8b formed of the second molten resin, and an innermost layer 8c formed of the third molten resin. The first and third molten resins are, for example, thermoplastic resins, such as polyolefin (polyethylene, polypropylene, and the like), and polyester. The second molten resin is, for example, a resin having excellent gas barrier property, such as EVOH and aromatic polyamide.

As shown in Fig. 3A to Fig. 4, in a state where the die 3 and the core 4 are mounted on the base 2, a distribution space 5 in which the molten resin is distributed is provided between an outer surface of the core 4 and an inner surface of the die 3. The distribution space 5 comprises a tubular space 5a, a flattening space 5b, and a fusion space 5c in order from an upstream side. The tubular space 5a is a tubular space connected to the tubular space 2g.

The resin tubular body 8 shown in Fig. 5A moves to the flattening space 5b through the tubular space 5a and is flattened in the flattening space 5b from its state in the tubular space, as shown in Fig. 5B, and then, as shown in Fig. 5C, its inner surfaces are fused with each other in the fusion space 5c to form a resin sheet 9. The resin sheet 9 is extruded through an opening 3d provided at a lower end 3c of the die 3.

Since the resin tubular body 8 has a multilayer structure, the resin sheet 9 also has a multilayer structure. Specifically, when the resin tubular body 8 has a three-layer structure, the resin sheet 9 comprises first to fifth layers 9a to 9e, as shown in Fig. 5C. The first and fifth layers 9a, 9e are derived from the outermost layer 8a, the second and fourth layers 9b, 9d are derived from the intermediate layer 8b, and the third layer 9c is derived from the innermost layer 8c. In the fusion space 5c, the innermost layers 8c facing each other are fused with each other to form the third layer 9c. Thus, the resin sheet 9 having a (2n-1)-layer structure is obtained from the resin tubular body 8 having an n-layer structure. The resin tubular body 8 may have a single-layer structure. In that case, the resin sheet 9 also has a single-layer structure. Therefore, n is an integer equal to or greater than 1, for example, 1, 2, 3, 4, or 5 and may be in the range between any two of the values exemplified herein.

The value of T/W is, for example, 0.1 to 0.95 (0.65 in Fig. 5C) and preferably 0.3 to 0.8 where W represents the width of the resin sheet 9 (the length in the left-right direction in Fig. 5C), and T represents the thickness (the length in the up-down direction in Fig. 5C). This value is, specifically, for example, 0.1, 0.2, 0.3, 0.4, 0.5, 0.6, 0.7, 0.8, 0.9, 0.95 and may be in the range between any two of the values exemplified herein. While it is not easy to stably form a thick-walled resin sheet by a method using a T-die, the thick-walled resin sheet 9 can be stably formed according to the configuration of the present embodiment.

The degree of development of the resin tubular body 8 when the resin tubular body 8 is flattened is defined by T1/W1. As shown in Fig. 5B, T1 and W1 respectively represent the length (T1) of the resin tubular body 8 in the thickness direction of the resin sheet 9 and the length (W1) of the resin tubular body 8 in the width direction of the resin sheet 9 in a target cross section for which the degree of development is calculated. The target cross section is a cross section perpendicular to the moving direction of the resin tubular body 8 and is usually a horizontal plane. The smaller the value of the degree of development, the more the resin tubular body 8 is widened and flattened. In the present embodiment, T1 is equal to W1 (T1=W1) in the tubular space 5a, and thus the degree of development of the resin tubular body 8 is 1. In the flattening space 5b, the degree of development of the resin tubular body 8 gradually decreases toward the downstream. The minimum value of the degree of development in the flattening space 5b is, for example, 0.1 to 0.95 (0.65 in Fig. 5B) and is preferably 0.3 to 0.8. This value is, specifically, for example, 0.1, 0.2, 0.3, 0.4, 0.5, 0.6, 0.7, 0.8, 0.9, 0.95 and may be in the range between any two of the values exemplified herein.

The resin tubular body 8 preferably has a uniform thickness along the circumferential direction in the tubular space 5a, while both ends 8d in the width direction are preferably thin-walled in the flattening space 5b. This is because the thinner the thickness of the resin tubular body 8 at both of the ends 8d, the easier it is for the second and fourth layers 9b, 9d derived from the intermediate layer 8b to reach both ends 9f of the resin sheet 9.

The degree of thickness unevenness of the resin tubular body 8 is defined by A1/A2. A1 and A2 respectively represent the minimum value (A1) of the wall thickness of the resin tubular body 8 and the maximum value (A2) of the wall thickness of the resin tubular body 8 in a target cross section for which the degree of thickness unevenness is calculated. The target cross section is similar to the target cross section for the degree of development. The smaller degree of thickness unevenness means that the wall thickness of the resin tubular body 8 is locally thinner. As shown in Fig. 5A, since the condition of A1=A2 is satisfied in the tubular space 5a, the degree of thickness unevenness of the resin tubular body 8 is 1. On the other hand, the degree of thickness unevenness of the resin tubular body 8 gradually decreases toward the downstream side. The minimum value of the degree of thickness unevenness in the flattening space 5b is, for example, 0 to 0.5 (0 in Fig. 5B) and preferably 0 to 0.2. This value is specifically, for example, 0, 0.05, 0.1, 0.2, 0.3, 0.4, 0.5 and may be in the range between any two of the values exemplified herein.

The fact that the degree of thickness unevenness is 0 means that the thickness at both of the ends 8d of the resin tubular body 8 in the width direction is 0, and in other words, in means that the resin tubular body 8 is divided at both of the ends 8d. Further, this means that the second and fourth layers 9b, 9d derived from the intermediate layer 8b reach both of the ends 9f of the resin sheet 9. Therefore, it is preferable that the degree of thickness unevenness is as close to as 0 as possible.

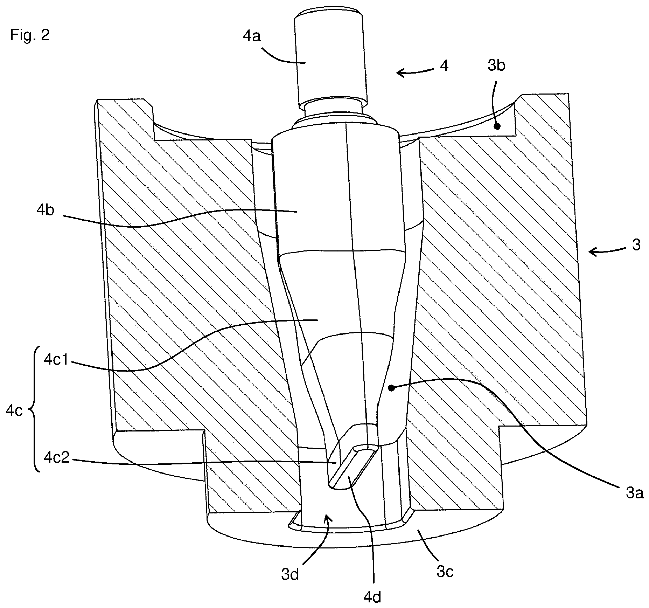

As shown in Fig. 2 to Fig. 4, the base 2 comprises a tubular portion 2i and a central portion 2j. The central portion 2j is arranged in the tubular portion 2i and is slidable with respect to the tubular portion 2i in the vertical direction. The die 3 comprises a hollow portion 3a and a mounting concave portion 3b. The core 4 is accommodated in the hollow portion 3a. A mounting convex portion 2h of the base 2 is inserted into the mounting concave portion 3b, and the die 3 is mounted on the tubular portion 2i of the base 2 in this state.

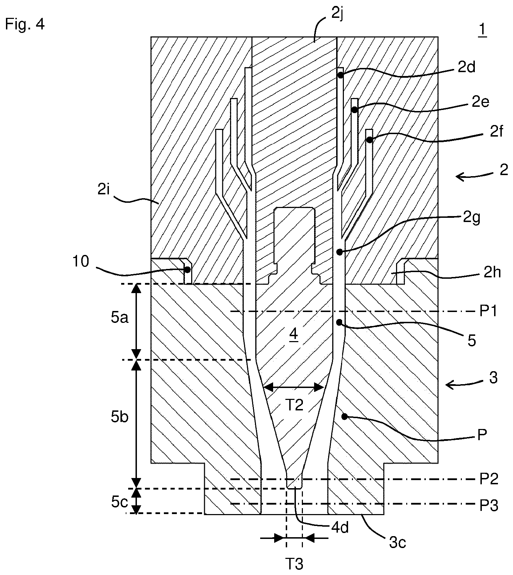

As shown in Fig. 4, a gap 10 is provided between the mounting convex portion 2h and the mounting concave portion 3b, and the die 3 is slidable with respect to the tubular portion 2i in the thickness direction (the right-left direction in Fig. 4) of a flattened portion 4c of the core 4. Consequently, the die 3 can be moved relative to the core 4 in the thickness direction of the flattened portion 4c of the core 4. This allows the thickness of the resin tubular body 8 on both sides in the thickness direction of the flattened portion 4c to be different from each other (that is, the thickness can be uneven), and the thickness balance of each layer of the multilayer structure of the resin tubular body 8 can be appropriately changed.

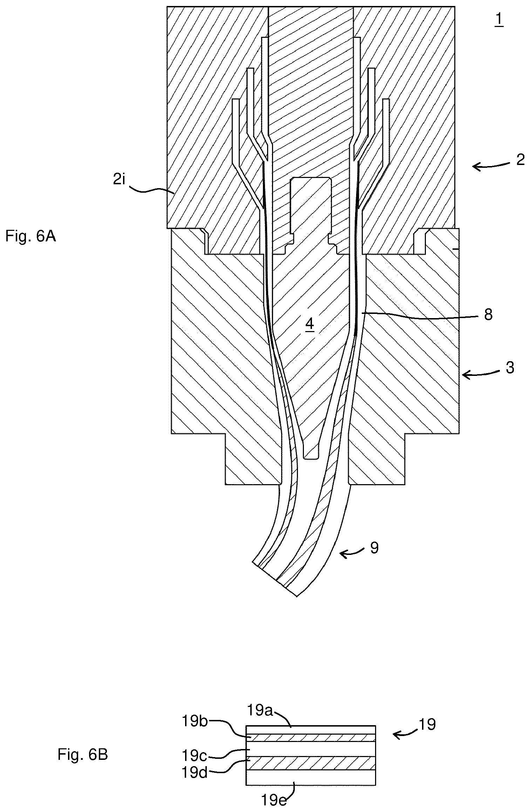

Further, as shown in Fig. 6A and Fig. 6B, when the thickness of the resin tubular body 8 is uneven, the resin sheet 9 is extruded from the extrusion head 1 in an oblique direction. When the resin sheet 9 is cut to a predetermined length in this state to form a resin sheet piece 19, the resin sheet piece 19 falls so that each of the layers 19a to 19e included in the resin sheet piece 19 is respectively horizontal. By dropping the resin sheet piece 19 in such an orientation, molding using the resin sheet piece 19, such as compression molding, can be performed smoothly. The layers 19a to 19e correspond to the first to fifth layers 9a to 9e of the resin sheet 9.

The core 4 comprises an attachment portion 4a, a body portion 4b, and the flattened portion 4c. The attachment portion 4a protrudes upward from the body portion 4b. The core 4 is fixed to the central portion 2j of the base 2 at the attachment portion 4a. Therefore, it is possible to vertically slide the core 4 together with the central portion 2j.

The body portion 4b preferably has a columnar shape. The flattened portion 4c is arranged downstream from the body portion 4b and has a higher degree of flatness than the body portion 4b. The space facing the body portion 4b serves as the tubular space 5a, and the space facing the flattened portion 4c serves as the flattening space 5b. The flattened portion 4c preferably comprises a transition portion 4c1 and a distal end portion 4c2. The transition portion 4c1 is a portion where the degree of flatness of the core 4 gradually increases. The distal end portion 4c2 is near the distal end of the core 4, and the degree of flatness of the core 4 is maximized at the distal end portion 4c2. In the transition portion 4c1, the width of the core 4 gradually increases toward the distal end of the core 4, as shown in Fig. 3A, while the thickness of the core 4 gradually decreases, as shown in Fig. 4A. Here, as shown in Fig. 3A, since the core 4 becomes wide enough at a position P to come into contact with the inner surface of the die 3, the width of the core 4 is constant below the position P.

The degree of flatness of the core 4 is defined by (W2-T2)/W2 wherein W2 represents the length of the core 4 in the width direction of the resin sheet 9 and T2 represents the length of the core 4 in the thickness direction of the resin sheet 9 in the target cross section for which the degree of flatness is calculated. The degree of flatness is 0 when the core 4 is a perfect circle (W2=T2), and the degree of flatness approaches 1 as the core 4 becomes flatter.

The maximum value of the degree of flatness of the core 4 is, for example, 0.1 to 0.99 (0.83 in the present embodiment) and is preferably 0.5 to 0.95. This value is specifically, for example, 0.1, 0.2, 0.3, 0.4, 0.5, 0.6, 0.7, 0.8, 0.9, 0.95, 0.99 and may be in the range between any two of the values exemplified herein.

As shown in Fig. 3A, a lower end 4d of the core 4 is arranged upstream from the lower end 3c of the die 3, and the space between the lower end 4d of the core 4 and the lower end 3c of the die 3 serves as the fusion space 5c. The value of D/T3 is preferably 1 or more (1.7 in the present embodiment) wherein D represents the distance between the lower end 4d of the core 4 and the lower end 3c of the die 3 in the vertical direction and T3 represents the thickness of the lower end 4d of the core 4, as shown in Fig. 3A to Fig. 4. In such a case, air is particularly prevented from being mixed into the resin sheet 9 when the resin tubular body 8 are fused to form the resin sheet 9. This value is, for example, 1 to 20, and preferably 1 to 10. This value is specifically, for example, 1, 1.1, 1.2, 1.3, 1.4, 1.5, 1.6, 1.7, 1.8, 1.9, 2, 2.5, 3, 4, 5, 6, 7, 8, 9, 10, 15, 20 and may be in the range between any two of the values exemplified herein. D is 5 mm or more and preferably 10 mm or more. This is because when D is too small, the inner surfaces of the resin tubular body 8 may not be fused with each other and the resin tubular body 8 may be extruded in a tubular shape. This value is, for example, 5 to 200 mm, specifically, for example, 5, 10, 20, 30, 40, 50, 100, 150, 200 mm and may be in the range between any two of the values exemplified herein or may be equal to or greater than any one value exemplified herein.

### 2. Manufacturing Method of Resin Sheet 9

The manufacturing method of the resin sheet 9 in one embodiment of the present invention comprises a step of flattening the resin tubular body 8 into the resin sheet 9 before extruding the resin tubular body 8 from the extrusion head 1 so that the inner surfaces of the resin tubular body 8 are fused with each other, the tubular body 8 being formed by forming the molten resin into a tubular shape in the extrusion head 1.

According to this method, the resin sheet 9 can be manufactured continuously. Further, according to this method, it is possible to prevent the inner surfaces of the resin tubular body 8 from being insufficiently fused with each other and to prevent air from being mixed into the resin sheet 9 when forming the resin sheet 9. Therefore, the resin sheet 9 of stable quality can be obtained. Further, when the resin sheet 9 has a multilayer structure, the ratio of the thickness of each of the layers included in the resin sheet 9 can be easily changed by changing the position of the core 4 according to the method of the present embodiment.

### 3. Application of Resin Sheet 9

The resin sheet 9 can be used for manufacturing a molded body. The resin sheet 9 immediately after manufacturing is in a molten state and may be molded in this state or may be molded after reheating. Examples of the molding method of the resin sheet 9 include vacuum molding and compression molding. The resin sheet 9 may be molded in a state where the resin sheet 9 is connected to the extrusion head 1 or after the resin sheet 9 is cut and separated from the extrusion head 1.

In one example, the resin sheet 9 is cut and separated from the extrusion head 1 for each predetermined length. The separated resin sheet 9 is then arranged in a female mold, and the resin sheet 9 in that state is compressed by inserting a male mold into the female mold to manufacture the molded body (compression molding). Further, when this molded body is a preform, a container can be manufactured by blow-molding this preform.

To perform blow molding using a preform, it is necessary to manufacture a preform with a large wall thickness, which requires the resin sheet 9 with a large wall thickness. While it has not been easy to stably manufacture the multi-layered resin sheet 9 with a large wall thickness in the conventional technique, it is possible to stably manufacture the multi-layered resin sheet 9 with a large wall thickness according to the present embodiment.

### (Embodiment not belonging to the invention)

### 1. Manufacturing Method of Molded Body

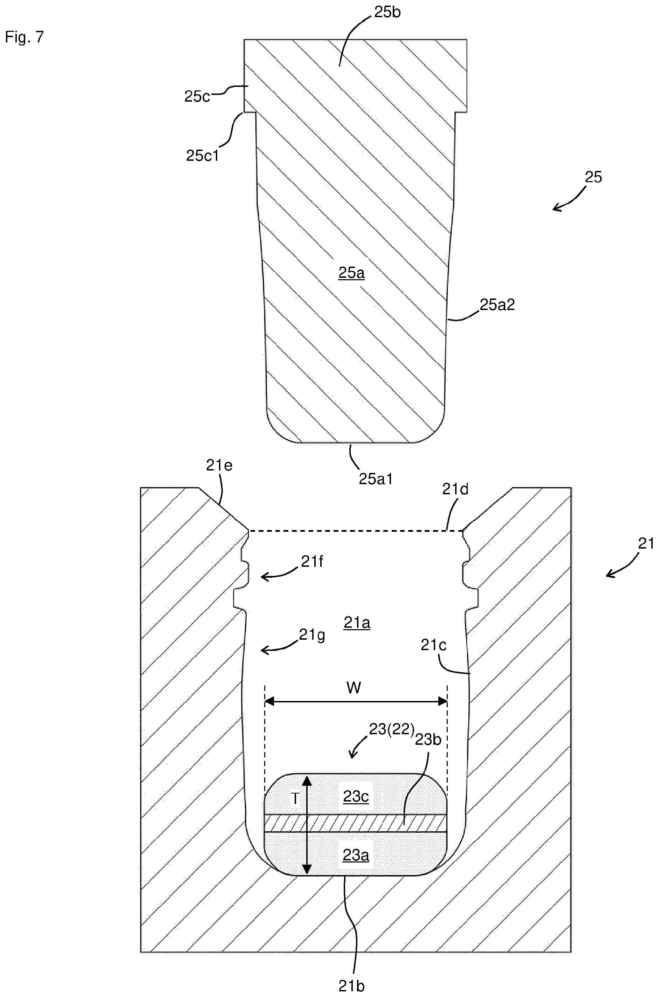

A manufacturing method of a molded body according to an embodiment not belonging to the present invention will be described with reference to Fig. 7 to Fig. 12.

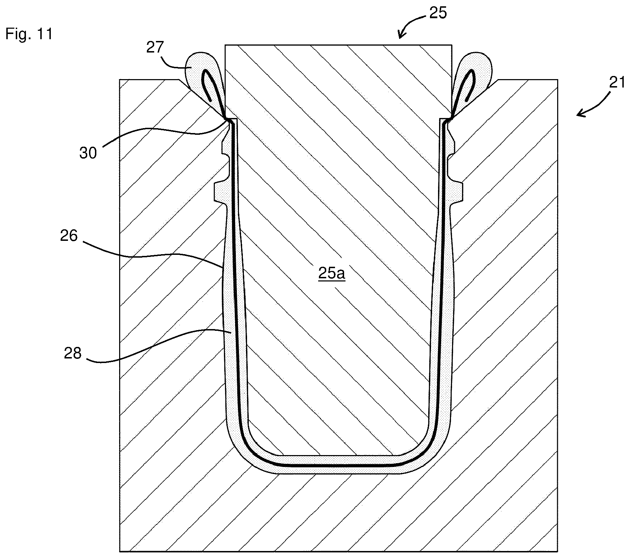

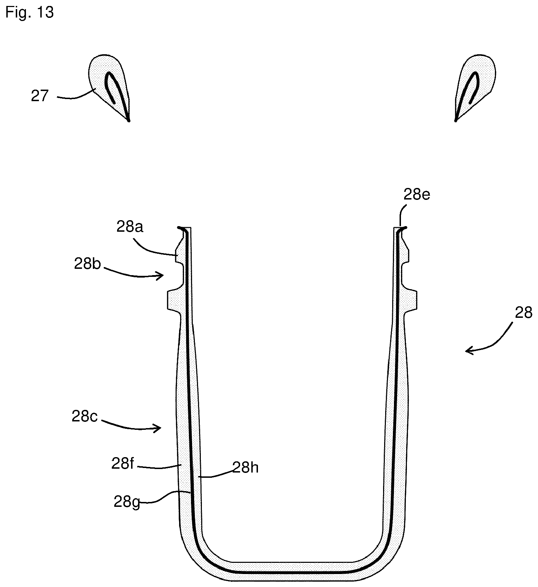

As shown in Fig. 13, a molded body 28 to be manufactured by this method has a bottomed tubular shape. The molded body 28 is formed by compression molding using a female mold 21 and a male mold 25, as shown in Fig. 7. The female mold 21 has a cavity 21a. The cavity 21a has an inner surface shape that defines the outer surface shape of the molded body 28. The male mold 25 has a core 25a. The core 25a is inserted into the cavity 21a of the female mold 21 during molding. The core 25a has an outer surface shape that defines the inner surface shape of the molded body 28. When the core 25a is inserted into the cavity 21a, a molding space 26 (shown in Fig. 11) having a shape corresponding to the shape of the molded body 28 is formed between the outer surface of the core 25a and the inner surface of the cavity 21a.

As shown in Fig. 7, the male mold 25 is provided with the core 25a protruding from a base 25b, and the base 25b is provided with a flange portion 25c protruding radially outward beyond the core 25a. The female mold 21 is provided with an inclined surface 21e that is continuous with an opening edge 21d of the cavity 21a. The inclined surface 21e is inclined so as to expand radially outward in a direction away from the opening edge 21d of the cavity 21a.

In one example, the molded body 28 is a preform used for blow molding of a container or the like. In such a case, as shown in Fig. 13, the molded body 28 in one example comprises a mouth portion 28b provided with an engagement portion 28a that allows the attachment of a discharge member (a member, such as a cap or a pump, used for discharging contents) and a body portion 28c continuous with the mouth portion 28b. In such a case, as shown in Fig. 7, the inner surface of the cavity 21a is provided with a part 21f that defines the outer surface shape of the mouth portion 28b and a part 21g that defines the outer surface shape of the body portion 28c.

The method of the present embodiment comprises a feeding step, a compression step, and a burr removal step. Each of the steps will be described below.

### 1-1. Feeding Step

In the feeding step, as shown in Fig. 7, a molten resin 22 is fed into the cavity 21a of the female mold 21.

The molten resin 22 is a thermoplastic resin in a molten state. The molten resin 22 may be in bulk or in a sheet form. Further, the molten resin 22 may have a single-layer structure or a multilayer structure. The molten resin 22 is arranged on a bottom surface 21b of the cavity 21a.

In the present embodiment, the molten resin 22 is a multilayer resin sheet 23 in a molten state. The multilayer resin sheet 23 comprises a lower layer 23a, an intermediate layer 23b, and an upper layer 23c in this order. The lower layer 23a, the intermediate layer 23b, and the upper layer 23c respectively become an outer layer 28f, an intermediate layer 28g, and an inner layer 28h of the molded body 28 to be manufactured (see Fig. 13). The lower layer 23a and the upper layer 23c are formed of, for example, polyolefin (polyethylene, polypropylene or the like), polyester or the like. The intermediate layer 23b is preferably a barrier layer having a gas barrier property superior to that of the lower layer 23a and the upper layer 23c, and is formed of, for example, a resin having an excellent gas property, such as EVOH or aromatic polyamide. The multilayer resin sheet 23 is preferably arranged such that the intermediate layer 23b is parallel to the bottom surface 21b. The number of layers in the multilayer resin sheet 23 may be 2 or four or more.

The value of T/W is, for example, 0.1 to 0.95 (0.56 in Fig. 7) and preferably 0.3 to 0.8 wherein W represents the width of the multilayer resin sheet 23 (the length in the left-right direction in Fig. 7) and T represents the thickness (the length in the up-down direction in Fig. 7). This value is, specifically, for example, 0.1, 0.2, 0.3, 0.4, 0.5, 0.6, 0.7, 0.8, 0.9, 0.95, and may be in the range between any two of the values exemplified herein. D/W is, for example, 0.5 to 1.5 and preferably 0.8 to 1.2 wherein D represents the depth (the length in the direction perpendicular to the paper surface in Fig. 7) of the multilayer resin sheet 23. This value is specifically, for example, 0.5, 0.6, 0.7, 0.8, 0.9, 1.0, 1.1, 1.2, 1.3, 1.4, 1.5 and may be in the range between any two of the values exemplified herein.

In one example, the molded body 28 manufactured by the method of the present embodiment is a preform used for blow molding of a container or the like. To perform blow molding using a preform, it is necessary to manufacture a preform with a large wall thickness. By using the multilayer resin sheet 23 with a large value of T/W, it becomes possible to manufacture a multilayer preform with a large wall thickness.

### 1-2. Compression Step

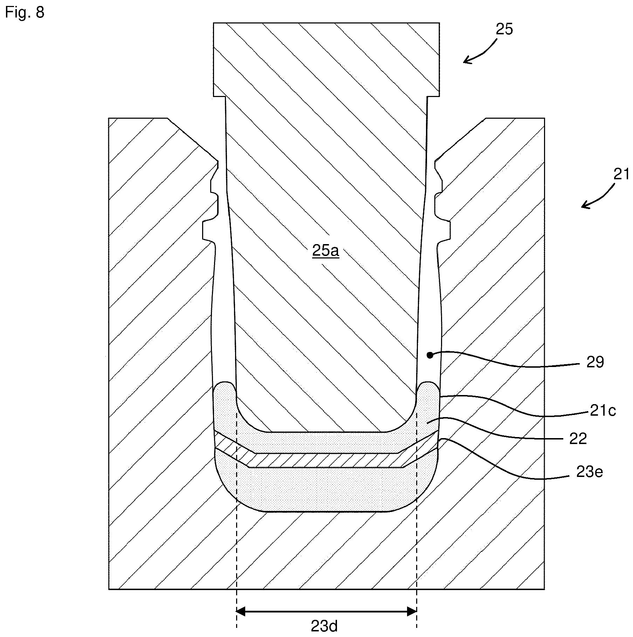

In the compression step, as shown in Fig. 8 to Fig. 11, the core 25a of the male mold 25 is inserted into the cavity 21a. Then, the molten resin 22 is sandwiched between the female mold 21 and the male mold 25, and the molten resin 22 is compressed to allow the molten resin 22 to overflow from the molding space 26 between the cavity 21a and the core 25a, so that the molded body 28 with a burr 27 is formed. The details of this step are as follows. The explanation will proceed using the case where the molten resin 22 is the multilayer resin sheet 23 as an example.

First, as shown in Fig. 8, a distal end 25a1 of the core 25a is pressed against the multilayer resin sheet 23. Then, a region 23d of the multilayer resin sheet 23 against which the distal end 25a1 is pressed becomes concave, and the molten resin 22 corresponding to the concave portion is pushed out of the region 23d. At this time, the multilayer resin sheet 23 spreads while maintaining its layered structure, and an edge 23e of the multilayer resin sheet 23 comes into contact with a side surface 21c of the cavity 21a, resulting in the state shown in Fig. 8.

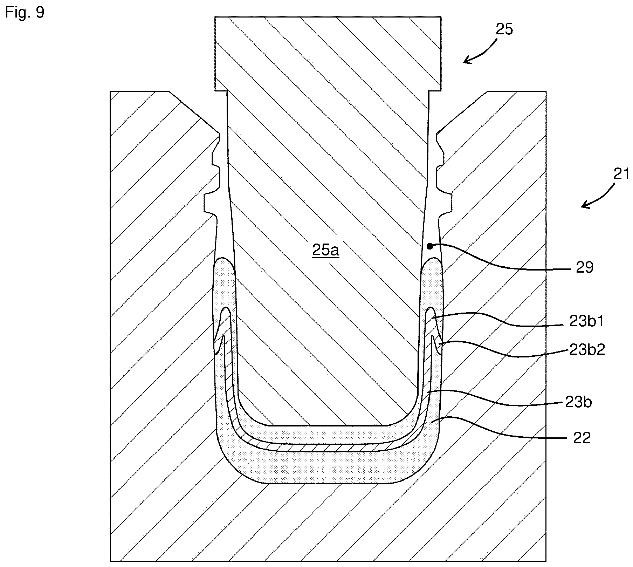

When the core 25a is pushed in further in this state, the molten resin 22 of the multilayer resin sheet 23 is further pushed out from the region 23d. Then, as shown in Fig. 9, the molten resin 22 pushed out from the region is pushed into a gap 29 between a side surface 25a2 of the core 25a and the side surface 21c of the cavity 21a and moves toward the opening edge 21d of the cavity 21a. Since a portion of the molten resin 22 in contact with the side surface 21c is more difficult to move, a folded portion 23b2 where the intermediate layer 23b is folded at a crease 23b1 tends to be formed in the intermediate layer 23b, as shown in Fig. 9.

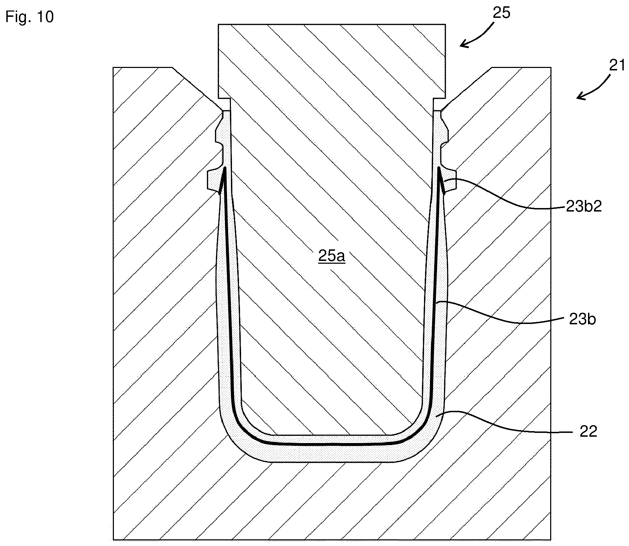

When the core 25a is pushed in further in this state, the molten resin 22 of the multilayer resin sheet 23 is further pushed out from the region 23d, and the molten resin 22 pushed out from the region moves toward the opening edge 21d of the cavity 21a, so that the molten resin 22 reaches the opening edge 21d of the cavity 21a, resulting in the state shown in Fig. 10. In the conventional technique, the pushing of the core 25a is completed in this state, and a molded body without a burr is taken out.

On the other hand, in the present embodiment, the core 25a is pushed in further from the state of Fig. 10. Then, as shown in Fig. 11, the molten resin 22 overflows from the molding space 26, and the overflowed portion becomes the burr 27, while the molded body 28 is formed in the molding space 26, so that the molded body 28 with the burr 27 is formed.

In the conventional technique, manufacturing defects tend to occur when the amount of resin fed into the female mold is slightly reduced for some reason, or when the fluidity of the resin decreases due to the environmental temperature drop. In contract, in the present embodiment, since the conditions of compression molding are set so that the molten resin 22 overflows, the molding space 26 is filled with the molten resin 22 even if the fed amount of the molten resin 22 is slightly reduced or if the fluidity of the molten resin 22 decreases due to the environmental temperature drop, thereby suppressing manufacturing defects.

Further, when the folded portion 23b2 is formed in the intermediate layer 23b, the intermediate layer 23b may not reach the opening edge 21d when the pushing of the core 25a is completed in the state of Fig. 10. Consequently, the intermediate layer 28g may not be formed up to an opening edge 28e (shown in Fig. 13) of the molded body 28. In such a case, there is a problem that the function of the intermediate layer 28g (for example, gas barrier function) is not exhibited in the vicinity of the opening edge 28e. On the other hand, in the present embodiment, the core 25a is pushed in further from the state of Fig. 10, and at this time the intermediate layer 23b moves toward the opening edge28e of the molded body 28. Therefore, the problem that the intermediate layer 28g is not formed up to the opening edge28e of the molded body 28 can be avoided.

As shown in Fig. 11, the core 25a is pushed in until a flange portion 25c is pressed against the female mold 21. By pressing the flange portion 25c against the female mold 21, a thin-walled portion 30 having a smaller thickness than the burr 27 is formed between the burr 27 and the molded body 28. The burr 27 can be separated from the molded body 28 by tearing the thin-walled portion 30.

Preferably, an edge 25c1 of the flange portion 25c is pressed against the inclined surface 21e. When the edge 25c1 is pressed against the inclined surface 21e, the pressure applied to the molten resin 22 increases due to the smaller area of the contact surface, so that the thickness of the thin-walled portion 30 can be reduced more easily.

### 1-3. Burr Removal Step

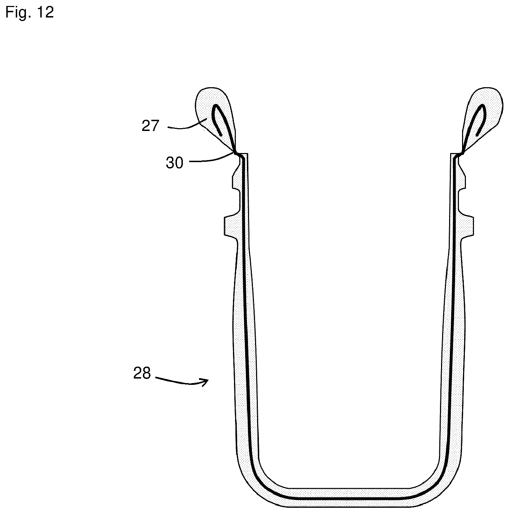

In the burr removal step, the burr 27 is removed from the molded body 28 with the burr 27, as shown in Fig. 12 to Fig. 14. The removed burr 27 can be used for production of recycled resin and the like.

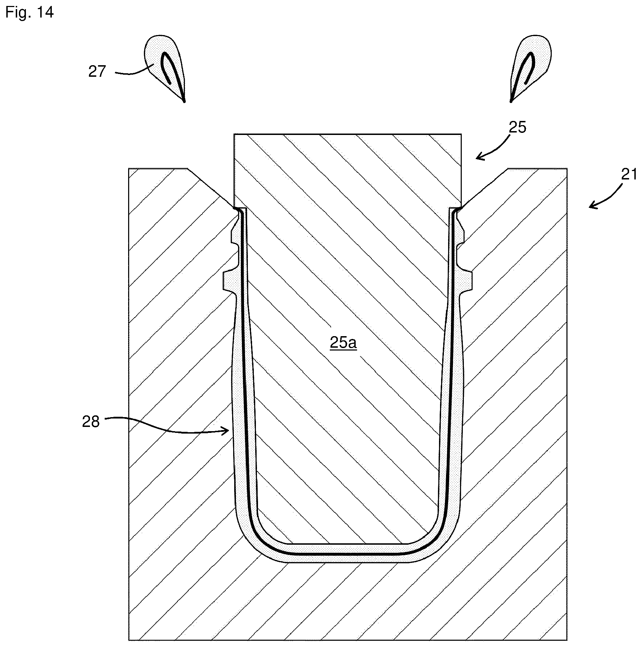

This step may be performed after removing the female mold 21 and the male mold 25 from the molded body 28 with the burr 27, as shown in Fig. 12 to Fig. 13, or may be performed without removing the female mold 21 and the male mold 25 from the molded body 28 with the burr 27, as shown in Fig. 14.

Further, the removal of the burr 27 may be performed before performing a post-process or after performing the post-process for the molded body 28. For example, when the molded body 28 is a preform used for blow molding, an example of the post-process is blow molding. This blow molding may be performed without reheating the molded body 28 or may be performed with the molded body 28 reheated.

In one example, in a state where the female mold 21 is removed from the molded body 28 and the molded body 28 is attached to the male mold 25, the molded body 28 is accommodated in a cavity of a split mold for a container. In this state, blow molding can be performed by blowing air into the molded body 28 through an air flow path built in the male mold 25. With such a method, a blow molded body can be manufactured efficiently. In this case, the burr may be removed before removing the female mold 21 or after removing the female mold 21.

In this regard, if the female mold 21 cannot be removed because the engagement portion 28a is caught in the female mold 21 in a state where the molded body 28 is attached to the male mold 25, the female mold 21 may be configured such that a portion including the part 21f defining the outer surface shape of the mouth portion 28b and a portion including the part 21g defining the outer surface shape of the body portion 28c are separatable from each other, and blow molding may be performed in a state where the part 21g is removed from the molded body 28 and the part 21f is attached to the molded body 28. The part 21f may be of an integrated configuration or may be a split mold. If the part 21f is of the integrated configuration, the male mold 25 can be removed from the molded body 28 after blow molding, and then the part 21f can be removed from the molded body 28. If the part 21f is the split mold, the part 21f can be removed from the molded body 28 before the male mold 25 is removed from the molded body 28 after blow molding.

By the steps described above, the molded body 28 from which the burr 27 has been removed can be obtained. The volume V1 of the resin forming the molded body 28 is smaller than the volume V2 of the molten resin 22 fed into the female mold 21 by the amount of the burr 27. Therefore, the condition of V2/V1>1 is satisfied. Further, the condition of V2/V1<2 is preferably satisfied because too much burr 27 leads to an increase in manufacturing cost. V2/V1 is preferably 1.05 to 1.5, specifically for example, 1.05, 1.1, 1.2, 1.3, 1.4, 1.5, 1.6, 1.7, 1.8, 1.9, 1.95 and may be in the range between any two of the values exemplified herein.

### 2. Other Embodiments

·The method described above is also applicable to the manufacture of containers that can be formed only by compression molding, such as a container of coffee whitener.

### Reference Signs List

1: extrusion head, 2: base, 2a: injection port, 2b: injection port, 2c: injection port, 2d: tubular space, 2e: tubular space, 2f: tubular space, 2g: tubular space, 2h: mounting convex portion, 2i: tubular portion, 2j: central portion, 3: die, 3a: hollow portion, 3b: mounting concave portion, 3c: lower end, 3d: opening, 4: core, 4a: attachment portion, 4b: body portion, 4c: flattened portion, 4c1: transition portion, 4c2: distal end portion, 4d: lower end, 5: distribution space, 5a: tubular space, 5b: flattening space, 5c: fusion space, 8: resin tubular body, 8a: outermost layer, 8b: intermediate layer, 8c: innermost layer, 8d: both ends, 9: resin sheet, 9a: first layer, 9b: second layer, 9c: third layer, 9d: fourth layer, 9e: fifth layer, 9f: both ends, 10: gap, 19: resin sheet piece, 19a to 19e: layer, 21: female mold, 21a: cavity, 21b: bottom surface, 21c: side surface, 21d: opening edge, 21e: inclined surface, 21f: part, 21g: part, 22: molten resin, 23: multilayer resin sheet, 23a: lower layer , 23b: intermediate layer, 23b1: crease, 23b2: folded portion, 23c: upper layer, 23d: region, 23e: edge, 25: male mold, 25a: core, 25a1: distal end, 25a2: side surface, 25b: base, 25c: flange portion, 25c1: edge, 26: molding space,
27: burr, 28: molded body, 28a: engagement portion, 28b: mouth portion, 28c: body portion, 28e: opening edge, 28f: outer layer, 28g: intermediate layer, 28h: inner layer, 29: gap, 30: thin-walled portion
convex portion, 2i: tubular portion, 2j: central portion, 3: die, 3a: hollow portion, 3b: mounting concave portion, 3c: lower end, 3d: opening, 4: core, 4a: attachment portion, 4b: body portion, 4c: flattened portion, 4c1: transition portion, 4c2: distal end portion, 4d: lower end, 5: distribution space, 5a: tubular space, 5b: flattening space, 5c: fusion space, 8: resin tubular body, 8a: outermost layer, 8b: intermediate layer, 8c: innermost layer, 8d: both ends, 9: resin sheet, 9a: first layer, 9b: second layer, 9c: third layer, 9d: fourth layer, 9e: fifth layer, 9f: both ends, 10: gap, 19: resin sheet piece, 19a to 19e: layer, 21: female mold, 21a: cavity, 21b: bottom surface, 21c: side surface, 21d: opening edge, 21e: inclined surface, 21f: part, 21g: part, 22: molten resin, 23: multilayer resin sheet, 23a: lower layer , 23b: intermediate layer, 23b1: crease, 23b2: folded portion, 23c: upper layer, 23d: region, 23e: edge, 25: male mold, 25a: core, 25a1: distal end, 25a2: side surface, 25b: base, 25c: flange portion, 25c1: edge, 26: molding space,
27: burr, 28: molded body, 28a: engagement portion, 28b: mouth portion, 28c: body portion, 28e: opening edge, 28f: outer layer, 28g: intermediate layer, 28h: inner layer, 29: gap, 30: thin-walled portion

## Claims

1. A manufacturing method of a resin sheet (9), **characterized by**:
a step of flattening a resin tubular body (8) into the resin sheet (9) before extruding the resin tubular body (8) from an extrusion head (1) so that inner surfaces of the resin tubular body (8) are fused with each other, the resin tubular body (8) being formed by forming a molten resin into a tubular shape in the extrusion head (1).

2. The method of Claim 1,
wherein the resin tubular body (8) has a multilayer structure.

3. The method of Claim 1 or Claim 2,
wherein the extrusion head (1) comprises a core (4) and a die (3) accommodating the core (4),
a distribution space (5) in which the molten resin (22) is distributed is provided between an outer surface of the core (4) and an inner surface of the die (3),
the distribution space (5) comprises a tubular space (5a), a flattening space (5b), and a fusion space (5c) in order from an upstream side, and
the resin tubular body (8) becomes the resin sheet (9) by fusing the inner surfaces in the fusion space (5c) after flattening the resin tubular body (8) in the flattening space (5b) from a state in the tubular space (5a).

4. The method of Claim 3,
wherein a minimum value of a degree of thickness unevenness of the resin tubular body (8) in the flattening space (5b) is 0 to 0.5.

5. An extrusion head (1),
wherein the extrusion head (1) is configured to flatten a resin tubular body (8) into a resin sheet (9) before extruding the resin tubular body (8) from the extrusion head (1) so that inner surfaces of the resin tubular body (8) are fused with each other, the resin tubular body (8) being formed by forming a molten resin into a tubular shape in the extrusion head (1),
the extrusion head (1) comprises a core (4) and a die (3) accommodating the core (4),
a distribution space (5) in which the molten resin is distributed is provided between an outer surface of the core (4) and an inner surface of the die (3),
the distribution space (5) comprises a tubular space (5a), a flattening space (5b), and a fusion space (5c) in order from an upstream side,
the resin tubular body (8) becomes the resin sheet (9) by fusing the inner surfaces in the fusion space (5c) after flattening the resin tubular body (8) in the flattening space (5b) from a state in the tubular space (5a),
the core (4) comprises a body portion (4b) and a flattened portion (4c),
the flattened portion (4c) is arranged downstream from the body portion (4b) and has a higher degree of flatness than the body portion (4b),
a space facing the body portion (4b) serves as the tubular space (5a), and a space facing the flattened portion (4c) serves as the flattening space (5b), and
a lower end (4d) of the core (4) is arranged upstream from a lower end (3c) of the die (3), and a space between the lower end (4d) of the core (4) and the lower end (3c) of the die (3) serves as the fusion space (5c).

## Patentansprüche

1. Verfahren zur Herstellung einer Harzfolie (9), **gekennzeichnet durch**:
einen Schritt des Abflachens eines rohrförmigen Harzkörpers (8) zu einer Harzfolie (9) vor dem Extrudieren des rohrförmigen Harzkörpers (8) aus einem Extrusionskopf (1), sodass Innenflächen des rohrförmigen Harzkörpers (8) miteinander verschmolzen werden, wobei der rohrförmige Harzkörper (8) durch Formen eines geschmolzenen Harzes zu einer rohrförmigen Form im Extrusionskopf (1) ausgebildet wird.

2. Verfahren nach Anspruch 1,
wobei der rohrförmige Harzkörper (8) eine mehrschichtige Struktur aufweist.

3. Verfahren nach Anspruch 1 oder Anspruch 2,
wobei der Extrusionskopf (1) einen Kern (4) und eine den Kern (4) aufnehmende Düse (3) aufweist,
wobei zwischen einer Außenfläche des Kerns (4) und einer Innenfläche der Düse (3) ein Verteilungsraum (5) bereitgestellt ist, in dem das geschmolzene Harz (22) verteilt wird,
wobei der Verteilungsraum (5) ausgehend von einer stromaufwärtigen Seite einen rohrförmigen Raum (5a), einen Abflachungsraum (5b) und einen Schmelzraum (5c) umfasst und
wobei der rohrförmige Harzkörper (8) durch Verschmelzen der Innenflächen im Schmelzraum (5c) nach dem Abflachen des rohrförmigen Harzkörpers (8) im Abflachungsraum (5b) aus einem Zustand im rohrförmigen Raum (5a) zur Harzfolie (9) wird.

4. Verfahren nach Anspruch 3,
wobei ein Minimalwert eines Dickenungleichmäßigkeitsgrads des rohrförmigen Harzkörpers (8) im Abflachungsraum (5b) 0 bis 0,5 beträgt.

5. Extrusionskopf (1),
wobei der Extrusionskopf (1) dazu ausgestaltet ist, einen rohrförmigen Harzkörper (8) zu einer Harzfolie (9) abzuflachen, bevor der rohrförmige Harzkörper (8) aus dem Extrusionskopf (1) extrudiert wird, sodass Innenflächen des rohrförmigen Harzkörpers (8) miteinander verschmolzen werden, wobei der rohrförmige Harzkörper (8) durch Formen eines geschmolzenen Harzes zu einer rohrförmigen Form im Extrusionskopf (1) ausgebildet wird,
wobei der Extrusionskopf (1) einen Kern (4) und eine den Kern (4) aufnehmende Düse (3) umfasst,
wobei zwischen einer Außenfläche des Kerns (4) und einer Innenfläche der Düse (3) ein Verteilungsraum (5) bereitgestellt ist, in dem das geschmolzene Harz verteilt wird,
wobei der Verteilungsraum (5) ausgehend von einer stromaufwärtigen Seite einen rohrförmigen Raum (5a), einen Abflachungsraum (5b) und einen Schmelzraum (5c) umfasst,
wobei der rohrförmige Harzkörper (8) durch Verschmelzen der Innenflächen im Schmelzraum (5c) nach dem Abflachen des rohrförmigen Harzkörpers (8) im Abflachungsraum (5b) aus einem Zustand im rohrförmigen Raum (5a) zur Harzfolie (9) wird,
wobei der Kern (4) einen Körperabschnitt (4b) und einen abgeflachten Abschnitt (4c) umfasst,
wobei der abgeflachte Abschnitt (4c) stromabwärts des Körperabschnitts (4b) angeordnet ist und einen höheren Abflachungsgrad als der Körperabschnitt (4b) aufweist,
wobei ein dem Körperabschnitt (4b) gegenüberliegender Raum als rohrförmiger Raum (5a) dient und ein dem abgeflachten Abschnitt (4c) gegenüberliegender Raum als Abflachungsraum (5b) dient und
wobei ein unteres Ende (4d) des Kerns (4) stromaufwärts eines unteren Endes (3c) der Düse (3) angeordnet ist und ein Abstand zwischen dem unteren Ende (4d) des Kerns (4) und dem unteren Ende (3c) der Düse (3) als der Schmelzraum (5c) dient.

## Revendications

1. Procédé de fabrication d'une feuille de résine (9), **caractérisé par** :
une étape d'aplatissement d'un corps tubulaire en résine (8) pour former la feuille de résine (9) avant l'extrusion du corps tubulaire en résine (8) à partir d'une tête d'extrusion (1) de telle sorte que des surfaces intérieures du corps tubulaire en résine (8) fusionnent ensemble, le corps tubulaire en résine (8) étant formé par la mise en forme d'une résine fondue en une forme tubulaire dans la tête d'extrusion (1).

2. Procédé selon la revendication 1,
dans lequel le corps tubulaire en résine (8) présente une structure multicouche.

3. Procédé selon la revendication 1 ou la revendication 2,
dans lequel la tête d'extrusion (1) comprend un poinçon (4) et une filière (3) accueillant le poinçon (4),
un espace de distribution (5), dans lequel la résine fondue (22) est distribuée, est fourni entre une surface extérieure du poinçon (4) et une surface intérieure de la filière (3),
l'espace de distribution (5) comprend, dans l'ordre à partir d'un côté amont, un espace tubulaire (5a), un espace d'aplatissement (5b) et un espace de fusion (5c), et
le corps tubulaire en résine (8) se transforme en feuille de résine (9) par fusion des surfaces intérieures dans l'espace de fusion (5c) après l'aplatissement du corps tubulaire en résine (8) dans l'espace d'aplatissement (5b) à partir d'un état dans l'espace tubulaire (5a).

4. Procédé selon la revendication 3,
dans lequel une valeur minimale d'un degré d'irrégularité d'épaisseur du corps tubulaire en résine (8) dans l'espace d'aplatissement (5b) est de 0 à 0,5.

5. Tête d'extrusion (1),
la tête d'extrusion (1) étant conçue pour aplatir un corps tubulaire en résine (8) pour former une feuille de résine (9) avant l'extrusion du corps tubulaire en résine (8) à partir de la tête d'extrusion (1) de telle sorte que des surfaces intérieures du corps tubulaire en résine (8) fusionnent ensemble, le corps tubulaire en résine (8) étant formé par la mise en forme d'une résine fondue en une forme tubulaire dans la tête d'extrusion (1),
la tête d'extrusion (1) comprenant un poinçon (4) et une filière (3) accueillant le poinçon (4),
un espace de distribution (5), dans lequel la résine fondue est distribuée, étant fourni entre une surface extérieure du poinçon (4) et une surface intérieure de la filière (3),
l'espace de distribution (5) comprenant, dans l'ordre à partir d'un côté amont, un espace tubulaire (5a), un espace d'aplatissement (5b) et un espace de fusion (5c),
le corps tubulaire en résine (8) se transformant en feuille de résine (9) par fusion des surfaces intérieures dans l'espace de fusion (5) après l'aplatissement du corps tubulaire en résine (8) dans l'espace d'aplatissement (5b) à partir d'un état dans l'espace tubulaire (5a),
le poinçon (4) comprenant une partie corps (4b) et une partie aplatie (4c),
la partie aplatie (4c) étant agencée en aval de la partie corps (4b) et présentant un degré d'aplatissement supérieur à celui de la partie corps (4b),
un espace situé en regard de la partie corps (4b) servant d'espace tubulaire (5a) et un espace situé en regard de la partie aplatie (4c) servant d'espace d'aplatissement (5b), et
une extrémité inférieure (4d) du poinçon (4) étant agencée en amont d'une extrémité inférieure (3c) de la filière (3) et un espace entre l'extrémité inférieure (4d) du poinçon (4) et l'extrémité inférieure (3c) de la filière (3) servant d'espace de fusion (5c).
